# EUROPÄISCHE PATENTSCHRIFT

(11) **EP 0 386 449 B1**
(45) Veröffentlichungstag und Bekanntmachung des Hinweises auf die Patenterteilung: **22.06.1994**
(21) Anmeldenummer: 90101877.0
(22) Anmeldetag: 31.01.1990
(51) Int. Cl.: B64D 11/02

(54) **Abort für Flugzeuge**
Aircraft toilet
Toilette pour aéronef

(30) Priorität: 10.03.1989 DE 3907818
(43) Veröffentlichungstag der Anmeldung: 12.09.1990
(73) Patentinhaber: BAVARIA KEYTRONIC TECHNOLOGIE GMBH, D-22761 Hamburg (DE)
(72) Erfinder: Rogerson, Michael, Irvine California 92714 (US); Klook, Silbert, D-2000 Hamburg 61 (DE); Wacker, Michael, D-2000 Hamburg 20 (DE); Antonczyk, Volker, D-2000 Hamburg 80 (DE)
(74) Vertreter: Hansmann, Dierk, Dipl.-Ing.

(56) Entgegenhaltungen:
- EP-A- 0 277 786
- WO-A-79/00826
- DE-A- 2 341 607
- FR-A- 2 286 922
- LU-A- 86 318
- US-A- 4 063 315
- US-A- 4 357 719
- ENGINEERING. (INCL. MACHINE SHOP MAGAZINE) vol. 221, no. 2, Februar 1981, LONDON GB Seiten 96 - 106; "APT" *Seite 105, Absatz 2; Figur 15*

## Beschreibung

Die Erfindung bezieht sich auf einen Abort für Flugzeuge, bestehend aus einem Toilettenbecken mit einer Vakuum- bzw. Unterdruckentleerung über eine steuerbare Abführöffnung in einen Sammelbehälter sowie mit einer Einrichtung zur Zuführung von Spülflüssigkeit in das Toilettenbecken und bei dem zur Vakuumerzeugung eine Verbindungsleitung zwischen dem Sammelbehälter und einem Flugzeugaußenbereich angeordnet ist.

Anordnungen dieser Art sind als Toilettensysteme bekannt, wobei vorgesehen ist, über ein Leitungssystem die Exkremente mit Unterdruck in einem entfernt vom Toilettenbecken liegenden Sammelbehälter abzuführen. Es besteht hierbei das Problem, daß eine Verstopfungsgefahr im Rohrleitungssystem besteht und der Unterdruck relativ groß sein muß, um den Transport durchzuführen.

Ferner besteht der Mangel, daß der Raumbedarf für derartige Toilettensysteme groß ist und der Einsatz bei kleineren Flugzeugen für den Regionalverkehr, sogenannte Commuteraircrafts, nicht möglich ist.

Aus der EP-A-0 277 786 ist eine Toilettenanlage für Flugzeuge bekannt, bei der ein Toilettenbecken über eine Verbindungsleitung an einen Sammelbehälter angeschlossen ist. Der Sammelbehälter ist mit einem Abfluß sowie einem Vakuumanschluß versehen. Mit Hilfe des Vakuumanschlußes erfolgt eine Unterdruckentleerung des Toilettenbeckens. Die Steuerung der Spül- und Entleerungsfunktionen erfolgt mit Hilfe einer elektronischen Einrichtung.

In der WO-A-7 900 826 wird eine Toilettenanlage für Boote oder Wohnwagen beschrieben. Ein Toilettenbecken ist als Einsatz in einem Toilettenstuhl oberhalb eines groß dimensionierten Sammelbehälters angeordnet. Zur Entleerung ist ein schräg verlaufendens Rohr innerhalb des Sammelbehälters angeordnet, das an eine Pumpe angeschlossen ist. Relativ zu Dimensionierung des Toilettenbeckens weist die Kombination aus dem Toilettenbecken und dem Sammelbehälter eine große Bauhöhe auf.

Aus der LU-A-86318 ist eine Toilette für einen Autobus bekannt, bei der eine Geruchsabsaugung im Bereich einer Toilettenbrille vorgesehen ist. Die Absaugungsausnehmungen sind an ein Entlüftungselement angeschlossen, das im Bereich eines Daches des Autobusses angeordnet ist.

Eine weitere Flugzeugtoilette ist in der US-A-4 063 315 angegeben. Die Toilette ist über ein Verbindungsrohr an einen Vorratstank angeschlossen. Zur Gewährleistung einer ausreichenden Lebensdauer ist ein Feuchtigkeitsfilter vorgesehen.

In der FR-A-2 286 922 ist eine Toilette für Fahrzeuge zum Personentransport angegeben. Die Toilette ist an einen Sammelbehälter angeschlossen, der zur Ermöglichung einer Reinigung Sprühdüsen aufweist. Über die Sprühdüsen kann Wasser in den Sammelbhälter eingeleitet werden.

Die Aufgabe der Erfindung ist es, für kleinere Flugzeuge eine gattungsgemäße Abortanlage zu schaffen, die eine kompakte Anordnung ermöglicht und mit geringen Mittel eine gute Funktionstüchtigkeit ohne Geruchsbelästigung des Passagierraumes gewährleistet.

Die Lösung dieser Aufgabe erfolgt erfindungsgemäß dadurch, daß das Toilettenbecken als Einsatz innerhalb des Sammelbehälters angeordnet ist und einen Vakuumanschluß oberhalb der maximalen Füllhöhe am Sammelbehälter aufweist sowie eine Füllstandsüberwachung im Bereich des Sammelbehälters angeordnet ist, die einen Füllstandspegel auf einem Niveau begrenzt, das etwa dem Niveau der steuerbaren Abführöffnung entspricht und daß in dem Sammelbehälter von außen versorgbare Reinigungsdüsen angeordnet sind.

Hierdurch wird mit einer direkten Anschaltung des unter Ausnutzung der Betriebsbedingungen eines Flugzeuges auftretenden Vakuums eine kompakte Ausbildung geschaffen und es entsteht eine wartungsfreundliche Ausbildung, die eine schnelle Austauschbarkeit gewährleistet sowie ein gutes Platz/Gewichtsverhältnis ermöglicht. Durch das fehlende Rohrsystem besteht auch bei geringer Spülflüssigkeitsmenge keine Verstopfungsgefahr und die Betriebweise wird relativ vereinfacht, wobei die Abführung unter Berücksichtigung der angestrebten Luftführungsrichtung und des Reinigungseffektes optimiert wird. Die Füllstandsüberwachung vermeidet eine Überfüllung unter gleichzeitiger guter Volumenausnutzung.

Durch die Integration des Toilettenbeckens in den Sammelbehälter als kompakte Einheit entsteht im Umgebungsbereich des Toilettenbeckens eine Pufferzone für das Vakuum.

Zur Aufrechterhaltung der Betriebsverhältnisse bei nicht ausreichender Druckdifferenz durch die Außenbehältnisse des Flugzeuges wird vorgeschlagen, daß eine Pumpe zusätzlich in die Verbindungsleitung zur Vakuumerzeugung im Sammelbehälter einschaltbar ist.

Weiterhin ist vorgesehen, daß im Bereich des Toilettenbeckens außerhalb des Sammelbehälters Absaugöffnungen angeordnet sind, die mit der Verbindungsleitung zum Flugzeugaußenbereich verbunden sind.

Zur Erzielung günstiger Betriebsverhältnisse wird vorgeschlagen, der Vakuumanschluß am Sammelbehälter über eine Kammer zur Aufnahme eines Feuchtigkeitsfilters erfolgt.

Um eine einfache Ausbildung zu erreichen, ist vorgesehen, daß die Spülflüssigkeit zugeführtes Frischwasser ist.

Die Wartungsfreundlichkeit wird erfindungsgemäß dadurch erhöht, daß in dem Sammelbehälter von außen versorgbare Reinigungsdüsen angeordnet sind.

Zur Einstellung einer günstigen Betriebsweise der Vorrichtung wird vorgeschlagen, daß die Zuführung der Spülflüssigkeit, die Steuerung der Abführöffnung und der Unterdruck im Sammelbehälter über eine elektronische Steuereinheit koordinierbar bzw. einstell- und überwachbar ist.

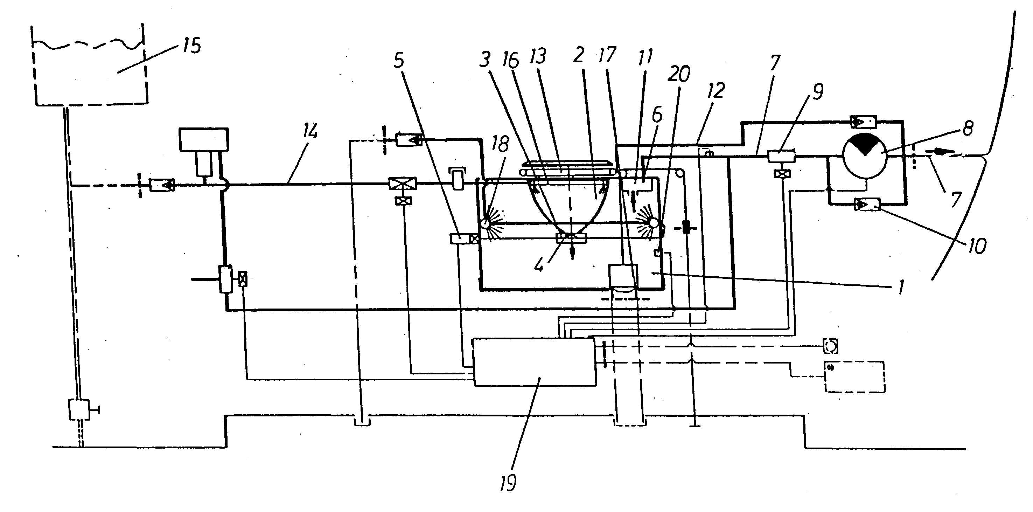

In der Zeichnung ist eine erfindungsgemäße Abortausbildung schematisch dargestellt.

Die Anordnung besteht aus einem Sammelbehälter 1, in den ein Toilettenbecken 2 eingesetzt ist, das quasi mit dem oberen Bereich des Sammelbehälters 1 abschließt. Das Toilettenbecken 2 besitzt eine über ein Ventil 3 steuerbare Abführöffnung 4, die in den Sammelbehälter 1 führt. Das Ventil 3 wird durch ein Stellelement 5 betätigt, das zusätzlich eine manuelle Betätigung aufweist. Der dem Toilettenbecken 2 direkt zugeordnete Sammelbehälter 1 besitzt zur Vakuumerzeugung einen Anschluß 6 im oberen Bereich, der über eine Verbindungsleitung 7, mit dem Flugzeugaußenbereich verbunden ist. Zusätzlich ist eine Pumpe 8 parallel in die Verbindungsleitung 7 eingeschaltet, um bei nicht ausreichenden Druckverhältnissen die erforderliche Druckdifferenz zu schaffen. In der Verbindungsleitung 7 ist dabei ein Steuerventil 9 und ein Rückschlagventil 10 eingeschaltet. Der Anschluß 6 der Verbindungsleitung 7 am Sammelbehälter erfolgt über eine Kammer 11, die einen Feuchtigkeitsfilter aufnimmt.

Weiterhin sind mit dem Unterdrucksystem über eine Leitung 12 im Bereich des Toilettenbeckens 2 Absaugöffnungen 13 verbunden. Zur Spülung wird Wasser über ein steuerbares Leitungssystem 14 aus einem Frischwassertank 15 über Düsen 16 dem Toilettenbecken 2 zugeführt.

Der Sammeltank 1 besitzt zur Entleerung eine Entsorgungsöffnung 17 und ist mit Reinigungsdüsen 18 versehen, die von außen versorgbar sind. Ferner ist eine Füllstandsüberwachung 20 zur Vermeidung einer Überfüllung angeordnet.

Die Steuerung, Überwachung und Einstellung der Betriebsbereitschaft wird über eine elektronische Steuereinheit 19 vorgenommen, die mit den einzelnen Steuerorganen und Überwachungseinrichtungen verbunden ist.

Über die Verbindungsleitung 7 wird im Sammelbehälter 1 ein Unterdruck eingestellt. Bei der bzw. vor einer Entleerung des Toilettenbeckens 2 über die Abführöffnung 4 mit dem Ventil 3 erfolgt eine Spülung mit Frischwasser, das über die Leitungen 12 an die Düsen 16 zugeführt wird. Durch den Unterdruck im Sammelbehälter 1 wird ein Abzug der Exkremente unterstützt und eine Geruchsbeeinträchtigung des Passagierraumes ausgeschaltet, da eine Absaugwirkung entsteht. Die Absaugwirkung wird noch zusätzlich durch die im Bereich des Toilettenbeckens 2 außerhalb des Sammelbehälters 1 angeordneten Absaugöffnungen 13 unterstützt.

## Patentansprüche

1. Abort für Flugzeuge, bestehend aus einem Toilettenbecken (2) mit einer Vakuum- bzw. Unterdruckentleerung über eine steuerbare Abführöffnung (4) in einen Sammelbehälter (1) sowie mit einer Einrichtung zur Zuführung von Spülflüssigkeit in das Toilettenbecken (2) und bei dem zur Vakuumerzeugung eine Verbindungsleitung zwischen dem Sammelbehälter und einem Flugzeugaußenbereich angeordnet ist, dadurch gekennzeichnet, daß das Toilettenbecken (2) als Einsatz innerhalb des Sammelbehälters (1) angeordnet ist und einen Vakuumanschluß (6) oberhalb der maximalen Füllhöhe am Sammelbehälter (1) aufweist sowie eine Füllstandsüberwachung (20) im Bereich des Sammelbehälters (1) angeordnet ist, die einen Füllstandspegel auf einem Niveau begrenzt, das etwa dem Niveau der steuerbaren Abführöffnung (4) entspricht und daß in dem Sammelbehälter (1) von außen versorgbare Reinigungsdüsen (18) angeordnet sind.

2. Abort nach Anspruch 1, dadurch gekennzeichnet, daß eine Pumpe (8) zusätzlich in die Verbindungsleitung (7) zur Vakuumerzeugung im Sammelbehälter einschaltbar ist.

3. Abort nach Anspruch 1 oder 2, dadurch gekennzeichnet, daß im Bereich des Toilettenbeckens (2) außerhalb des Sammelbehälters (1) Absaugöffnungen (13) angeordnet sind, die mit der Verbindungsleitung (7) zum Flugzeugaußenbereich verbunden sind.

4. Abort nach einem der Ansprüche 1 bis 2, dadurch gekennzeichnet, daß der Vakuumanschluß (6) am Sammelbehälter (1) über eine Kammer (11) zur Aufnahme eines Feuchtigkeitsfilters erfolgt.

5. Abort nach einem der Ansprüche 1 bis 4, dadurch gekennzeichnet, daß die Spülflüssigkeit zugeführtes Frischwasser ist.

6. Abort nach einem der Ansprüche 1 bis 5, dadurch gekennzeichnet, daß die Zuführung der Spülflüssigkeit, die Steuerung der Abführöffnung (4) und der Unterdruck im Sammelbehälter (1) über eine elektronische Steuereinheit (19) koordinierbar bzw. einstell- und überwachbar ist.

## Claims

1. Toilet for aircraft, comprising a toilet bowl (2) with vacuum or partial-vacuum emptying via a controllable discharge opening (4) into a collecting tank (1), as well as having a device for supplying flushing liquid into the toilet bowl (2) and wherein, for vacuum generation, a connection line is disposed between the collecting tank and an external region of the aircraft, characterized in that the toilet bowl (2) is disposed as an insert inside the collecting tank (1) and has a vacuum connection (6) above the maximum filling level of the collecting tank (1) and a filling level monitoring device (20) is disposed in the region of the collecting tank (1) and limits a filling level to a level corresponding approximately to the level of the controllable discharge opening (4), and that cleaning nozzles (18) which may be supplied from the outside are disposed in the collecting tank (1).

2. Toilet according to claim 1, characterized in that a pump (8) may be additionally inserted into the connection line (7) for vacuum generation in the collecting tank.

3. Toilet according to claim 1 or 2, characterized in that disposed in the region of the toilet bowl (2) outside of the collecting tank (1) are extraction openings (13) which are connected to the connection line (7) leading to the external region of the aircraft.

4. Toilet according to one of claims 1 to 2, characterized in that the vacuum connection (6) to the collecting tank (1) is effected via a chamber (11) for receiving a moisture filter.

5. Toilet according to one of claims 1 to 4, characterized in that the flushing liquid is supplied fresh water.

6. Toilet according to one of claims 1 to 5, characterized in that the supply of flushing liquid, control of the discharge opening (4) and the partial vacuum in the collecting tank (1) may be coordinated or adjusted and monitored by means of an electronic control unit (19).

## Revendications

1. Toilette pour aéronef comportant une cuvette de toilette (2) avec vidange sous vide ou sous dépression, par une ouverture d'écoulement (4) pouvant être commandée, dans un réservoir collecteur (1), et avec dispositif pour l'amenée de liquide de rinçage dans la cuvette de toilette (2), un conduit de liaison étant prévu entre le réservoir collecteur et une zone extérieure de l'aéronef pour la production du vide, caractérisée en ce que la cuvette de toilette (2) est prévue sous la forme d'un élément monté à l'intérieur du réservoir collecteur (1) et présente un raccordement (6) pour le vide au dessus de la hauteur de remplissage maximale du réservoir collecteur (1), et en ce qu'un dispositif de surveillance de remplissage (20) est prévu dans la zone du réservoir collecteur (1), dispositif de surveillance qui limite un niveau de remplissage à un niveau qui correspond au niveau de l'ouverture d'écoulement (4) pouvant être commandée, et en ce que dans le réservoir collecteur (1), il est prévu des gicleurs de nettoyage (18) pouvant être alimentés de l'extérieur.

2. Toilette suivant une revendication 1, caractérisée en ce qu'une pompe (8) peut être montée additionnellement sur le conduit de liaison (7) pour la production du vide dans le réservoir collecteur.

3. Toilette suivant l'une ou l'autre des revendications 1 et 2, caractérisée en ce que dans la zone de la cuvette de toilette (2), à l'extérieur du réservoir collecteur (1), il est prévu des ouvertures d'aspiration (13) qui sont reliées au conduit de liaison (7) allant vers la zone extérieure de l'aéronef.

4. Toilettes suivant l'une ou l'autre des revendications 1 et 2, caractérisée en ce que le raccordement (6) pour le vide au réservoir collecteur (1) agit par l'intermédiaire d'une chambre (11) destinée à contenir un filtre à humidité.

5. Toilette suivant l'une quelconque des revendications 1 à 4, caractérisée en ce que le liquide de rinçage est de l'eau fraîche qui y est amenée.

6. Toilette suivant l'une quelconque des revendications 1 à 5, caractérisée en ce que l'amenée du liquide de rinçage, la commande de l'ouverture d'écoulement (4) et la dépression dans le réservoir collecteur (1) peuvent être contrôlées, c'est-à-dire réglées et surveillées par une unité de commande et de réglage électronique (19).
